(19) **Europäisches Patentamt / European Patent Office / Office européen des brevets**

(11) **EP 3 785 026 B1**

(12) **FASCICULE DE BREVET EUROPEEN**

(45) Date de publication et mention de la délivrance du brevet:
**09.03.2022 Bulletin 2022/10**

(21) Numéro de dépôt: **19728481.3**

(22) Date de dépôt: **19.04.2019**

(51) Classification Internationale des Brevets (IPC):
**G01N 29/04** *(2006.01)* **G01N 29/26** *(2006.01)*
**G01N 29/44** *(2006.01)* **G01N 29/46** *(2006.01)*

(52) Classification Coopérative des Brevets (CPC):
**G01N 29/043; G01N 29/262; G01N 29/4463;**
**G01N 29/46;** G01N 2291/0258; G01N 2291/106

(86) Numéro de dépôt international:
**PCT/FR2019/050950**

(87) Numéro de publication internationale:
**WO 2019/207243 (31.10.2019 Gazette 2019/44)**

(54) **PROCÉDÉ ET SYSTÈME DE CONTRÔLE NON DESTRUCTIF D'UNE PIÈCE MÉCANIQUE**

VERFAHREN UND SYSTEM ZUR ZERSTÖRUNGSFREIEN PRÜFUNG EINES MECHANISCHEN BAUTEILS

METHOD AND SYSTEM FOR THE NON-DESTRUCTIVE TESTING OF A MECHANICAL PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2018 FR 1853544**

(43) Date de publication de la demande:
**03.03.2021 Bulletin 2021/09**

(73) Titulaires:
• **SAFRAN**
  **75015 Paris (FR)**
• **Centre national de la recherche scientifique**
  **75016 Paris (FR)**

(72) Inventeurs:
• **BAELDE, Aurélien**
  **77550 MOISSY-CRAMAYEL (FR)**
• **PRADA, Claire**
  **75006 PARIS (FR)**
• **JENSON, Frédéric**
  **77550 MOISSY-CRAMAYEL (FR)**

(74) Mandataire: **Cabinet Beau de Loménie**
  **158, rue de l'Université**
  **75340 Paris Cedex 07 (FR)**

(56) Documents cités:
  **EP-A2- 1 550 863     WO-A1-2010/001027**

**EP 3 785 026 B1**

**Description**

Arrière-plan de l'invention

L'invention concerne le domaine général de la mécanique.

Elle se rapporte plus particulièrement au contrôle non destructif par ultrasons de pièces mécaniques comme par exemple des pièces aéronautiques telles que des billettes en alliage de titane, des disques de soufflantes ou des disques aubagés monoblocs équipant des moteurs d'aéronefs et notamment des turboréacteurs. Aucune limitation n'est attachée toutefois à la nature ni à la forme des pièces mécaniques considérées.

De façon connue, on désigne par contrôle non destructif un ensemble de méthodes qui permettent de caractériser l'état d'intégrité et/ou la qualité de structures ou de matériaux sans les dégrader. Le contrôle non destructif a une application privilégiée mais non limitative dans le domaine de l'aéronautique, et plus généralement dans n'importe quel domaine industriel dans lequel les structures dont on souhaite caractériser l'état ou la qualité sont coûteuses et/ou leur fiabilité de fonctionnement est critique. Le contrôle non destructif peut être avantageusement réalisé sur la structure ou le matériau considéré aussi bien en cours de production qu'en cours d'utilisation ou de maintenance.

Un certain nombre de pièces mécaniques critiques équipant les moteurs d'aéronef et plus particulièrement les turboréacteurs, sont réalisées en alliage de titane à partir de billettes cylindriques. Afin de s'assurer de l'intégrité de telles pièces mécaniques avant leur montage dans un turboréacteur, il est connu de réaliser sur ces pièces un contrôle non destructif utilisant la propagation d'ondes ultrasonores, et permettant de détecter la présence éventuelle de défauts ou d'indications de défauts dans les pièces contrôlées. Ce contrôle non destructif est généralement réalisé sur les billettes et après forgeage. Il est classique d'utiliser à cet effet un transducteur (i.e. un capteur) composé de multiples éléments piézoélectriques aptes à émettre et à recevoir des ondes ultrasonores.

Lors du contrôle non destructif, des ondes ultrasonores sont émises par le transducteur multiélément à une fréquence déterminée, et interagissent avec la microstructure du matériau de la pièce dont on souhaite vérifier l'intégrité. Un « bruit » ultrasonore est mesuré par le transducteur multiélément : ce bruit est en concurrence avec les échos associés aux indications de défauts potentiellement présentes dans la pièce. Plus spécifiquement, chaque élément du transducteur multiélément mesure un signal comprenant plusieurs composantes, à savoir :

- une composante dite de diffusion simple, représentant les trajets d'onde où l'onde propagée dans la pièce mécanique n'interagit qu'une seule fois avec le matériau de la pièce (i.e. n'est réfléchie qu'une seule fois sur les diffuseurs présents dans le matériau de la pièce, ces diffuseurs pouvant être liés à des défauts présents dans la pièce ou aux différentes faces de la pièce) avant d'être mesurée par les éléments du transducteur multiélément (on parle aussi d'onde rétrodiffusée reçue par les éléments du transducteur multiélément) ;
- éventuellement une composante dite de diffusion multiple, représentant les trajets d'onde où l'onde propagée dans la pièce mécanique interagit plusieurs fois avec le matériau de la pièce mécanique (i.e. fait l'objet de plusieurs réflexions successives sur les diffuseurs présents dans le matériau) avant d'être mesurée par les éléments du transducteur multiélément ; et
- une composante de bruit électronique.

L'utilisation d'un transducteur multiélément offre avantageusement la possibilité d'appliquer aux signaux mesurés par le transducteur, un filtrage numérique (matriciel) permettant de réduire la composante de bruit électronique et le cas échéant, la composante de diffusion multiple, présente(s) dans ces signaux au profit des composantes reflétant le cas échéant la présence d'indications de défauts dans la pièce mécanique. Ceci permet d'améliorer l'analyse des signaux mesurés observés pour contrôler l'intégrité de la pièce mécanique, et le cas échéant la détection de défauts dans la pièce mécanique.

Le document WO 2010/001027 décrit une méthode de filtrage numérique basée sur la séparation de la composante de diffusion simple de la composante de diffusion multiple. Cette méthode consiste à projeter les signaux mesurés par le transducteur multiélément sur un sous-espace caractéristique du régime de diffusion simple et estimé de façon théorique à partir des propriétés de propagation du matériau de la pièce contrôlée (vitesse de propagation de l'onde dans le matériau et nombre d'onde notamment). Cette estimation théorique s'appuie sur l'hypothèse d'une interface plane entre le transducteur multiélément et la pièce mécanique, le transducteur multiélément étant placé en contact direct avec la pièce mécanique.

En pratique, les contrôles non destructifs réalisés sur les pièces aéronautiques, et notamment sur les billettes mentionnées précédemment, sont souvent réalisés en immersion afin de permettre une inspection rapide du volume entier des pièces. Dans ce contexte, le transducteur multiélément est déplacé autour de la pièce mécanique immergée et il n'est pas toujours possible de le positionner en contact direct avec la pièce mécanique. En outre, les pièces mécaniques dont on souhaite vérifier l'intégrité ne sont pas toujours planes : elles peuvent au contraire avoir des formes plus complexes, comme par exemple des formes cylindriques, sphériques ou toutes autres, qui ne correspondent pas aux hypothèses du document WO 2010/001027.

Il existe donc un besoin d'une technique de filtrage numérique pouvant être utilisée pour le contrôle non destructif par ultrasons d'une pièce mécanique, quelle que soit la forme de cette pièce mécanique et de l'interface entre la pièce mécanique et le transducteur multiélément apte à émettre les ondes ultrasonores.

Objet et résumé de l'invention

La présente invention répond notamment à ce besoin en proposant un procédé de contrôle non destructif d'une pièce mécanique par propagation d'ondes ultrasonores réalisée au moyen d'un transducteur multiélément placé en vis-à-vis de la pièce mécanique et comprenant une pluralité d'éléments piézoélectriques e(1),e(2),...,e(N), N désignant un entier supérieur à 1, ce procédé de contrôle comprenant :

- une étape de mesure comprenant, pour chaque élément e(i) du transducteur, l'émission d'une onde ultrasonore à une fréquence donnée et la mesure, par chaque élément e(j) du transducteur distinct de l'élément e(i), d'un signal temporel noté kij(t) représentatif de l'onde ultrasonore rétrodiffusée reçue par l'élément e(j) ;
- une étape de détermination d'au moins une première matrice de composantes temporelles à partir des signaux kij(t) mesurés, i,j=1,...,N, pris sur une durée prédéterminée autour d'une référence temporelle notée T ;
- une étape de détermination d'au moins une deuxième matrice de composantes fréquentielles correspondant à une fréquence déterminée à partir de la fréquence de l'onde sonore en appliquant une transformée de Fourier aux composantes temporelles de ladite au moins une première matrice ;
- une étape de filtrage de ladite au moins une deuxième matrice comprenant une projection de ladite au moins une deuxième matrice de composantes fréquentielles sur un sous-espace de diffusion simple ; et
- une étape de vérification de l'intégrité de la pièce mécanique en utilisant ladite au moins une deuxième matrice filtrée.

Le procédé de contrôle est remarquable en ce que le sous-espace de diffusion simple utilisé lors de l'étape de filtrage est déterminé au moyen d'un calcul numérique utilisant un algorithme de tracé de rayons.

Par exemple, dans un mode particulier de réalisation, l'étape de filtrage de la deuxième matrice comprend :

- une étape de détermination du sous-espace de diffusion simple, ledit sous-espace de diffusion simple étant défini à partir d'une base de 2N-1 matrices notées Em, m=1,...,2N-1, ladite étape de détermination comprenant :

  ◦ pour chaque couple d'éléments distincts e(i) et e(j) du transducteur, i, j, =1,...,N, une étape de calcul numérique en utilisant un algorithme de tracé de rayons, pour une pluralité D de diffuseurs notés Pd, d=1...,D répartis en divers points de la pièce mécanique et situés à une profondeur déterminée en fonction de la référence temporelle T, d'un temps de propagation tijd d'une onde ultrasonore émise par l'élément e(i), diffractée par le diffuseur Pd et reçue par l'élément e(j), le temps de propagation tijd étant calculé en tenant compte de la forme de la pièce mécanique, du placement du transducteur et des milieux dans lesquels se propage l'onde ultrasonore entre les éléments e(i) et e(j) du transducteur et le diffuseur Pd ;
  ◦ une étape d'estimation d'une contribution de la diffusion simple dans les composantes fréquentielles de la deuxième matrice à partir des temps de propagation calculés pour chaque couple d'éléments distincts e(i) et e(j) du transducteur, ladite étape d'estimation fournissant une troisième matrice ;
  ◦ une étape d'extraction des composantes fréquentielles d'une anti-diagonale centrale de la troisième matrice pour construire la base de matrices Em, m=1,...,2N-1 définissant le sous-espace de diffusion simple ;

- une étape de projection de ladite au moins une deuxième matrice sur chacune des matrices Em, m=1,..,2N-1 de la base de 2N-1 matrices ; et
- une étape d'évaluation de ladite au moins une deuxième matrice filtrée à partir des matrices Em de la base pondérées par les projections obtenues lors de l'étape de projection.

Corrélativement, l'invention vise aussi un système de contrôle non destructif d'une pièce mécanique comprenant :

- un transducteur multiélément placé en vis-à-vis de la pièce mécanique et apte à émettre des ondes ultrasonores, ledit transducteur comprenant une pluralité d'éléments piézoélectriques e(1),e(2),...,e(N), N désignant un entier supérieur à 1, ledit transducteur étant configuré pour émettre, via chaque élément e(i) du transducteur, une onde ultrasonore à une fréquence donnée, et à mesurer, via chaque élément e(j) du transducteur distinct de l'élément e(i), un signal temporel noté kij(t) représentatif de l'onde ultrasonore rétrodiffusée reçue par l'élément e(j) ;
- un dispositif de validation comprenant :

◦ un premier module de détermination, configuré pour déterminer au moins une première matrice de composantes temporelles à partir des signaux kij(t) mesurés, i,j=1,...,N, pris sur une durée prédéterminée autour d'une référence temporelle notée T ;

◦ un second module de détermination, configuré pour déterminer au moins une deuxième matrice de composantes fréquentielles correspondant à une fréquence déterminée à partir de la fréquence de l'onde sonore en appliquant une transformée de Fourier aux composantes temporelles de ladite au moins une première matrice ;

o un module de filtrage, configuré pour filtrer ladite au moins une deuxième matrice en projetant ladite au moins une deuxième matrice de composantes fréquentielles sur un sous-espace de diffusion simple ; et

◦ un module d'analyse, configuré pour vérifier l'intégrité de la pièce mécanique en utilisant ladite au moins une deuxième matrice filtrée ;

le système de contrôle étant remarquable en ce que le module de filtrage est configuré pour déterminer le sous-espace de diffusion simple au moyen d'un calcul numérique utilisant un algorithme de tracé de rayons.

Dans un mode particulier de réalisation, le module de filtrage comprend notamment :

- un troisième module de détermination, configuré pour déterminer le sous-espace de diffusion simple à partir d'une base de 2N-1 matrices notées Em, m=1,...,2N-1, ledit troisième module de détermination étant configuré pour:

  ◦ pour chaque couple d'éléments distincts e(i) et e(j) du transducteur, i, j, =1,...,N, calculer numériquement en utilisant un algorithme de tracé de rayons, pour une pluralité D de diffuseurs notés Pd, d=1...,D répartis en divers points de la pièce mécanique et situés à une profondeur déterminée en fonction de la référence temporelle T, un temps de propagation tijd d'une onde ultrasonore émise par l'élément e(i), diffractée par le diffuseur Pd et rétrodiffusée par l'élément e(j), ledit temps de propagation étant calculé en tenant compte de la forme de la pièce mécanique, du placement du transducteur et des milieux dans lesquels se propage l'onde ultrasonore entre les éléments e(i) et e(j) du transducteur et le diffuseur Pd ;

  ◦ estimer une contribution de la diffusion simple dans les composantes fréquentielles de la deuxième matrice à partir des temps de propagation calculés pour chaque couple d'éléments distincts e(i) et e(j) du transducteur, et obtenir une troisième matrice à partir des contributions estimées ;

  ◦ extraire des composantes fréquentielles d'une anti-diagonale centrale de la troisième matrice pour construire la base de matrices Em, m=1,...,2N-1 définissant le sous-espace de diffusion simple ;

- un module de projection, configuré pour projeter ladite au moins une deuxième matrice sur chacune des matrices Em, m=1,..,2N-1 de la base de 2N-1 matrices ; et
- un module d'évaluation configuré pour évaluer ladite au moins une deuxième matrice filtrée à partir des matrices Em de la base pondérées par les projections obtenues lors de l'étape de projection.

L'invention propose un filtrage numérique dans le domaine fréquentiel des signaux mesurés par le transducteur multiélément qui ne s'appuie plus, contrairement à la méthode proposée dans le document WO 2010/001027, sur une estimation théorique de ce sous-espace de diffusion simple basée sur un certain nombre d'hypothèses concernant l'interface entre la pièce mécanique et le transducteur multiélément, mais sur un sous-espace de diffusion simple calculé numériquement. Ce calcul numérique utilise un algorithme de tracé (ou de lancer) de rayons (« ray tracing » en anglais), qui permet avantageusement de simuler de façon réaliste la propagation des ondes ultrasonores émises par le transducteur multiélément dans la pièce mécanique.

Plus précisément, l'algorithme de tracé de rayons utilisé propose de relier les éléments du transducteur multiélément avec les diffuseurs appartenant à la pièce mécanique par des chemins compatibles avec les lois de la physique et notamment avec les lois de Snell Descartes. Ceci permet de bien caractériser les phénomènes physiques qui se produisent lors de l'émission d'ondes ultrasonores par le transducteur multiélément à destination de la pièce mécanique que l'on cherche à contrôler (ex. pénétration dans la pièce mécanique, réflexion(s) par les diffuseurs appartenant au matériau de la pièce mécanique, puis retour aux éléments du transducteur). En outre, les chemins simulés au moyen de l'algorithme de tracé de rayons tiennent compte de la forme de la pièce physique (au niveau des points d'entrée et de sortie des ondes ultrasonores dans la pièce mécanique).

L'utilisation d'un tel algorithme permet donc de tenir compte des conditions dans lesquelles le contrôle non destructif est opéré et par làmême, de pouvoir relâcher les contraintes sur ces conditions, par exemple au niveau de la forme de la pièce mécanique dont on souhaite vérifier l'intégralité, du placement du transducteur multiélément par rapport à la pièce mécanique, des milieux dans lesquels se propage l'onde ultrasonore entre les éléments du transducteur multiélément et les diffuseurs appartenant à la pièce mécanique, etc. Elle conduit à un calcul numérique précis, dont il résulte une amélioration de la qualité du contrôle non destructif opéré et le cas échéant, de la détection de défauts dans la pièce mécanique.

L'invention propose donc un filtrage numérique des signaux mesurés par un transducteur multiélément lors d'un contrôle non destructif d'une pièce mécanique qui peut être utilisé quelle que soit la forme de la pièce mécanique et quelle que soit l'interface entre le transducteur multiélément et la pièce mécanique. Il suffit en effet pour utiliser l'invention que le transducteur multiélément soit positionné en vis-à-vis de la pièce mécanique, c'est-à-dire en face de la pièce mécanique (en contact direct ou non) afin que les ondes ultrasonores émises par le transducteur puissent se propager dans la pièce. Le transducteur peut par ailleurs être déplacé autour de la pièce afin de permettre l'inspection de tout le volume de la pièce et ainsi faciliter son contrôle. Le procédé de contrôle non destructif proposé par l'invention n'est donc pas tributaire d'un contact direct entre le transducteur multiélément et la pièce mécanique, ni d'une forme plane de cette dernière. Il peut être aisément utilisé pour le contrôle non destructif de pièces complexes telles que des pièces aéronautiques et en particulier des billettes, des disques aubagés ou des disques de soufflantes tels qu'évoqués précédemment, y compris lorsque ces pièces sont placées en immersion.

Dans un mode particulier de réalisation de l'invention, chaque temps de propagation tijd est calculé selon :

$$tijd = \min_{Pe} tid(Pe) + \min_{Ps} tdj(Ps)$$

où Pe désigne un point d'entrée de coordonnées (xe,ze) de l'onde ultrasonore dans la pièce mécanique et Ps un point de sortie de coordonnées (xs,zs) de l'onde ultrasonore diffractée par le point Xd de coordonnées (xd,zd), avec :

$$tid(x) = \frac{\sqrt{(xe - xi)^2 + (ze - zi)^2}}{c1} + \frac{\sqrt{(xd - xe)^2 + (zd - ze)^2}}{c2}$$

et

$$tdj(x) = \frac{\sqrt{(xd - xs)^2 + (zd - zs)^2}}{c2} + \frac{\sqrt{(xs - xj)^2 + (zs - zj)^2}}{c1}$$

où c1 désigne la vitesse de propagation de l'onde ultrasonore dans le milieu séparant le transducteur de la pièce mécanique et c2 désigne la vitesse de propagation de l'onde ultrasonore dans la pièce mécanique.

Ce mode de calcul du temps de propagation tient compte à la fois de la forme du transducteur (linéaire, matricielle ou autre), de la nature de l'interface entre le transducteur et la pièce mécanique (configuration de placement par exemple du transducteur par rapport à la pièce mécanique), et de la forme de la pièce mécanique.

Dans un mode particulier de réalisation, ladite au moins une deuxième matrice est déterminée à la fréquence de l'onde ultrasonore.

En variante, plusieurs deuxièmes matrices sont déterminées à une pluralité de fréquences contenues dans un intervalle prédéterminé défini autour de la fréquence de l'onde ultrasonore.

Par ailleurs, dans un autre mode particulier de réalisation, plusieurs premières matrices correspondant à des références temporelles différentes et/ou à des durées prédéterminées différentes sont déterminées.

Ces différents modes de réalisation permettent d'améliorer la précision du contrôle non destructif. Les références temporelles considérées correspondent typiquement à des profondeurs dans la pièce mécanique où l'on soupçonne la présence de défauts. Si une telle profondeur est connue, il suffit de se focaliser sur une référence temporelle correspondant au temps de propagation des ondes ultrasonores jusqu'à cette profondeur. Si on ne dispose pas d'indications sur la localisation de défauts éventuels, plusieurs références temporelles et durées prédéterminées autour de ces références temporelles peuvent être envisagées pour améliorer le contrôle effectué.

On note qu'aucune limitation n'est attachée à la technique utilisée pour vérifier l'intégrité à proprement parler de la pièce mécanique à partir de la ou des deuxièmes matrices filtrées conformément à l'invention. Par exemple, l'étape de vérification de l'intégrité de la pièce mécanique peut utiliser une technique DORT de diagonalisation de l'opérateur de retournement temporel ou une méthode de focalisation totale, connues en soi. La contribution de l'invention réside davantage sur le filtrage des signaux mesurés par le transducteur multiélément : ce filtrage est amélioré, ce qui permet de diminuer le bruit présent dans les signaux utilisés pour le contrôle non destructif à proprement parler, quelle que soit la méthode utilisée à cet effet.

Dans un mode particulier de réalisation, le système de contrôle selon l'invention comprend en outre un bras robotisé sur lequel est placé le transducteur multiélément, ledit bras robotisé étant configuré pour permettre un déplacement du transducteur multiélément autour de la pièce mécanique.

Comme mentionné précédemment, grâce à la mobilité du transducteur multiélément autour de la pièce mécanique, il est possible d'observer aisément l'ensemble du volume de la pièce et de proposer un contrôle non destructif plus efficace et plus rapide.

Il convient de noter que l'invention s'applique à différents types de transducteur multiélément. Celui-ci peut être linéaire, mais également matriciel ou avoir une forme plus complexe.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, dans son environnement, un système de contrôle non destructif conforme à l'invention, dans un mode particulier de réalisation ;
- la figure 2 représente un exemple d'architecture matérielle d'un dispositif de validation appartenant au système de contrôle non destructif de la figure 1 ;
- la figure 3 représente, sous forme d'ordinogramme, les principales étapes d'un procédé de contrôle non destructif selon l'invention tel qu'il est mis en oeuvre par le système de la figure 1 ;
- la figure 4 représente les principales étapes mises en oeuvre lors du filtrage opéré par le dispositif de validation de la figure 2 conformément à l'invention ;
- la figure 5 illustre les propriétés de la matrice inter-élément mesurée par le système de contrôle non destructif de la figure 1 lors de la mise en oeuvre du procédé de contrôle selon l'invention ; et
- la figure 6 représente un chemin considéré par l'algorithme de tracé de rayons utilisé lors du procédé de contrôle conformément à l'invention.

Description détaillée de l'invention

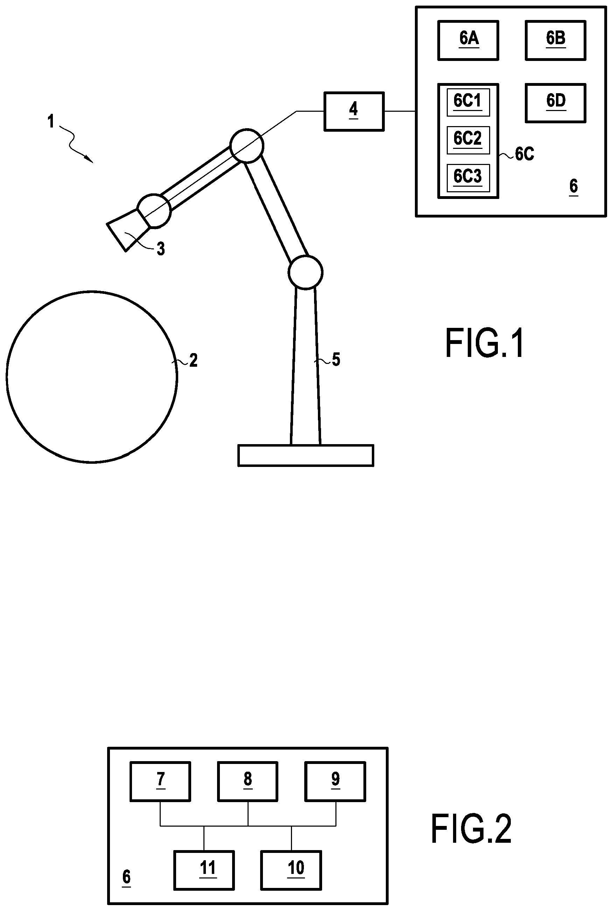

La **figure 1** représente, dans son environnement, un système de contrôle non destructif 1 conforme à l'invention, dans un mode particulier de réalisation.

Dans l'exemple envisagé à la figure 1, le système de contrôle non destructif 1 est utilisé à titre illustratif pour réaliser le contrôle de l'intégrité d'une pièce mécanique 2 de forme cylindrique. Cette pièce mécanique est par exemple ici une billette en alliage de titane telle qu'évoquée précédemment, et utilisée pour la conception de pièces aéronautiques destinées à équiper un moteur d'aéronef tel qu'un turboréacteur.

Bien entendu cet exemple n'est donné qu'à titre illustratif et l'invention s'applique à d'autres pièces mécaniques, quelle que soit leur destination et de forme quelconque (par exemple à un disque aubagé monobloc ou à un disque de soufflante d'un moteur d'aéronef).

Conformément à l'invention, le système de contrôle non destructif 1 comprend :

- un transducteur multiélément 3 (linéaire ici), comprenant une pluralité d'éléments piézoélectriques e(1),e(2),...,e(N), N désignant un entier supérieur à 1. Chaque élément piézoélectrique e(i) du transducteur est apte à émettre une onde ultrasonore à une fréquence donnée ; chaque élément piézoélectrique e(j), j≠i, du transducteur est apte à mesurer un signal temporel noté kij(t) représentatif de l'onde ultrasonore émise par l'élément piézoélectrique e(i) et rétrodiffusée, reçue par l'élément e(j). Dans le mode de réalisation décrit ici, le transducteur multiélément 3 est piloté par un amplificateur multivoie 4, connu en soi, et non décrit en détail ici. Celui-ci est apte à générer et à amplifier les N signaux (ondes ultrasonores) destinés à être appliqués aux éléments piézoélectriques, et à les appliquer de façon indépendante sur chacun des éléments piézoélectriques ; il est également apte à amplifier les signaux mesurés par chaque élément piézoélectrique ;
- un bras robotisé 5 sur lequel est positionné le transducteur multiélément et qui permet de placer le transducteur multiélément en vis-à-vis de la pièce mécanique 2 à tester. Le bras robotisé 5 peut en outre être configuré pour déplacer le transducteur multiélément 3 autour de la pièce mécanique 2 afin de faciliter l'examen de l'ensemble du volume de la pièce ; et
- un dispositif de validation 6 de la pièce mécanique 2, conforme à l'invention, apte à utiliser les signaux mesurés par le transducteur multiéléments en réponse aux ondes ultrasonores propagées dans la pièce mécanique 2 pour déterminer si la pièce mécanique 2 contient ou non des indications de défauts.

On note qu'aucune limitation n'est attachée à la forme du transducteur multiélément 3. Dans le mode de réalisation décrit ici, celui-ci est linéaire, mais d'autres formes peuvent être envisagées (par exemple carrée, rectangulaire, etc.).

Le contrôle non destructif de la pièce mécanique 2 peut en outre être réalisé en immergeant la pièce mécanique 2 dans une cuve de contrôle (non représentée sur la figure 1) contenant un corps liquide, tel que par exemple de l'eau, pour favoriser le transfert de l'énergie ultrasonore du transducteur multiélément vers la pièce mécanique 2.

Dans le mode de réalisation décrit ici, le dispositif de validation 6 est un ordinateur, dont l'architecture matérielle est illustrée sur la **figure 2.**

Il comprend, notamment un processeur 7, une mémoire vive 8, une mémoire morte 9, une mémoire flash non volatile 10 ainsi que des moyens de communication 11 permettant notamment au dispositif de validation 6 de communiquer avec l'amplificateur multivoie 4 pour récupérer notamment les signaux mesurés par le transducteur multiélément 3. Ces moyens de communication comprennent par exemple un bus de données numériques ou si le dispositif de validation 6 et l'amplificateur multivoie 4 sont reliés via un réseau de télécommunications (local ou autre, filaire ou sans fil, etc.), une carte réseau ou une interface permettant de communiquer sur ce réseau.

La mémoire morte 9 du dispositif de validation 6 constitue un support d'enregistrement, lisible par le processeur 7 et sur lequel est enregistré un programme d'ordinateur (ou un ensemble de programmes d'ordinateurs) PROG. Ce programme d'ordinateur PROG comprend une pluralité d'instructions exécutables par le processeur 7, et qui définissent différents modules fonctionnels et logiciels ici du dispositif de validation 6, ces modules fonctionnels s'appuyant sur et/ou commandant les éléments matériels 7-11 du dispositif de validation mentionnés précédemment. Ils comprennent notamment ici, comme illustré sur la figure 1 :

- un premier module de détermination 6A, configuré pour déterminer au moins une première matrice de composantes temporelles à partir des signaux kij(t) mesurés par le transducteur multiélément 3, i,j=1,...,N, pris sur une durée prédéterminée notée ΔT autour d'une référence temporelle notée T ;
- un second module de détermination 6B, configuré pour déterminer au moins une deuxième matrice de composantes fréquentielles correspondant à une fréquence déterminée à partir de la fréquence des ondes ultrasonores émises par le transducteur multiélément 3, ce module 6B étant configuré pour appliquer à cet effet une transformée de Fourier aux composantes temporelles de ladite au moins une première matrice ;
- un module de filtrage 6C, configuré pour filtrer ladite au moins une deuxième matrice en la projetant sur un sous-espace de diffusion simple ; et
- un module d'analyse 6D, configuré pour vérifier l'intégrité de la pièce mécanique en utilisant ladite au moins une deuxième matrice filtrée obtenue par le module de filtrage 6C.

Le module de filtrage 6C du dispositif de validation 6 comprend lui-même une pluralité de modules, définis par des instructions du programme d'ordinateur PROG, comprenant notamment :

- un troisième module de détermination 6C1, configuré pour déterminer le sous-espace de diffusion simple utilisé par le module de filtrage 6C. Ce sous-ensemble de diffusion simple est défini à partir d'une base de 2N-1 matrices notées Em, m=1,...,2N-1. Pour déterminer cette base, le troisième module de détermination 6C1 est configuré pour :

    o pour chaque couple d'éléments distincts e(i) et e(j) du transducteur multiélément 3, i, j=1,...,N, calculer numériquement en utilisant un algorithme de tracé de rayons, pour une pluralité D de diffuseurs notés Pd, d=1...,D répartis en divers points de la pièce mécanique 2 et situés à une profondeur déterminée en fonction de la référence temporelle T, un temps de propagation tijd d'une onde ultrasonore émise par l'élément e(i), diffractée par le diffuseur Pd et rétrodiffusée par l'élément e(j), ledit temps de propagation étant calculé en tenant compte de la forme de la pièce mécanique, du placement du transducteur et des milieux dans lesquels se propage l'onde ultrasonore entre les éléments e(i) et e(j) du transducteur et le diffuseur Pd ;
    ○ estimer une contribution de la diffusion simple dans les composantes fréquentielles de la deuxième matrice à partir des temps de propagation calculés pour chaque couple d'éléments distincts e(i) et e(j) du transducteur, et obtenir une troisième matrice à partir des contributions estimées ;
    ○ extraire des composantes fréquentielles d'une anti-diagonale centrale de la troisième matrice pour construire la base de matrices Em, m=1,...,2N-1 définissant le sous-espace de diffusion simple ;

- un module de projection 6C2, configuré pour projeter ladite au moins une deuxième matrice sur chacune des matrices Em, m=1,..,2N-1 de la base de 2N-1 matrices ; et
- un module d'évaluation 6C3 configuré pour évaluer ladite au moins une deuxième matrice filtrée en sommant les 2N-1 matrices Em pondérées respectivement par les projections obtenues par le module de projection 6C2.

Les fonctions de ces modules 6A à 6D sont décrites plus en détail maintenant en référence aux étapes du procédé de contrôle non destructif selon l'invention.

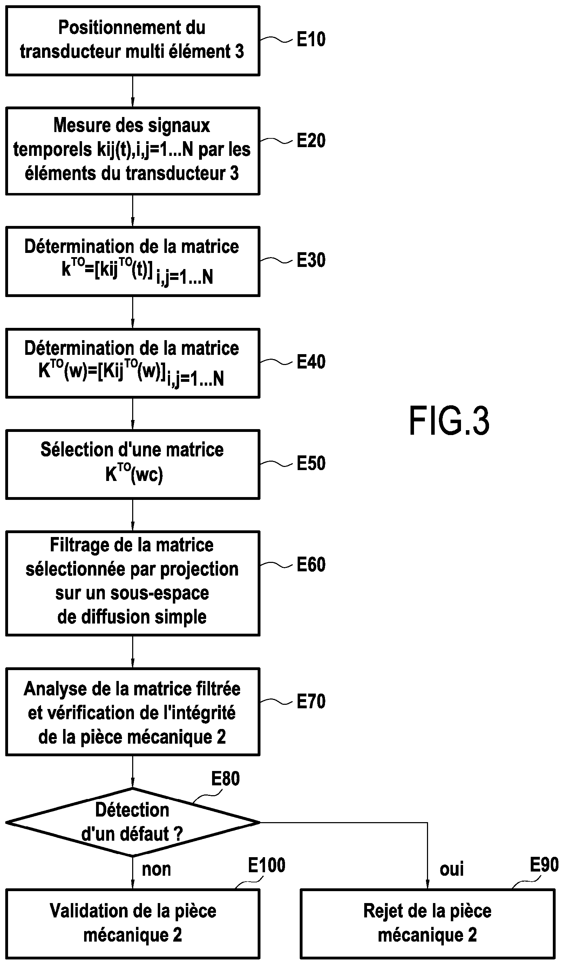

La **figure 3** représente les principales étapes du procédé de contrôle non destructif mis en oeuvre par le système de contrôle non destructif 1 pour contrôler l'intégrité de la pièce mécanique 2, dans un mode particulier de réalisation de l'invention.

On suppose que le transducteur multiélément 3 est positionné et orienté par le bras robotisé 5 selon une position POS dite courante dans laquelle il est placé en vis-à-vis de la pièce mécanique 2 (étape E10). Aucune limitation n'est attachée au choix de la position courante POS. Toutefois, préférentiellement, le transducteur multiélément 3 est positionné à une distance inférieure à 1m de la pièce mécanique 2, qui peut être ajustée de sorte à permettre la mesure d'un niveau de signal suffisant avec le transducteur multiélément 3 pour pouvoir réaliser le filtrage numérique conformément à l'invention. Un tel niveau de signal peut être déterminé expérimentalement. Il est intrinsèquement lié ici aux caractéristiques et aux propriétés de l'amplificateur multivoie 4 qui est utilisé pour amplifier les signaux reçus par le transducteur élément 3 de sorte à les rendre exploitables. On évitera également de placer le transducteur multiélément 3 en face d'arêtes saillantes de la pièce mécanique 2 pour éviter que le niveau de signal renvoyé par la pièce mécanique 2 ne soit trop bas.

Une fois le transducteur multiélément 3 positionné, l'amplificateur multivoie 4 est activé pour piloter le transducteur multiélément 3 pour réaliser des mesures (étape E20). Plus spécifiquement, chaque élément piézoélectrique $e(i)$, $i=1,...,N$ du transducteur 3 est activé pour émettre chacun à leur tour une onde ultrasonore à destination de la pièce mécanique 2 à une fréquence donnée, notée ici f0. Suite à l'émission d'une onde ultrasonore par un élément piézoélectrique $e(i)$, les autres éléments piézoélectriques $e(j)$ distinct de l'élément $e(i)$ sont chacun activés pour mesurer et enregistrer sur une certaine durée paramétrable un signal temporel, noté $kij(t)$ représentatif de l'onde ultrasonore rétrodiffusée et reçue par chacun de ces éléments $e(j)$. Chaque signal temporel $kij(t)$ ainsi mesuré caractérise donc la réponse du matériau de la pièce mécanique 2 lorsque l'élément piézoélectrique $e(i)$ émet une onde ultrasonore à la fréquence f0 et l'élément $e(j)$ enregistre l'onde ultrasonore rétrodiffusée par le matériau.

Les signaux $kij(t)$ ainsi mesurés sont transmis par le transducteur multiélément 3 à l'amplificateur multivoie 4, qui les transmet à son tour au dispositif de validation 6. Ils forment ici les composantes d'une matrice dite inter-élément notée $k(t)$.

Le dispositif de validation 6 détermine, via son premier module de détermination 6A, une première matrice notée $k^{T0}(t)$ dont les composantes sont des signaux temporels extraits des signaux $kij(t)$ mesurés, $i,j=1,...,N$, et transmis au dispositif de validation 6 (étape E30). Plus spécifiquement, le premier module de détermination 6A extrait de chaque signal $kij(t)$, une tranche temporelle $kij^{T0}(t)$ de durée $\Delta T$ prise autour d'une référence temporelle notée T0, et forme avec les signaux ainsi extraits la première matrice $k^{T0}$. Autrement dit :

$$k^{T0}(t)=[kij^{T0}(t)]_{i,j=1,...,N}$$

Dans le mode de réalisation décrit ici, par souci de simplification, le premier module de détermination 6A détermine une unique matrice $kij^{T0}(t)$ dont les signaux sont des signaux temporels de durée $\Delta T$ autour de T0. Toutefois, dans un autre mode de réalisation, le premier module de détermination 6A peut déterminer plusieurs « premières » matrices distinctes, correspondant à des tranches temporelles prises autour de références temporelles distinctes de T0, les durées de ces tranches temporelles pouvant être prises égales à ou être différentes de $\Delta T$.

Puis le dispositif de validation 6, via son deuxième module de détermination 6B, applique une transformée de Fourier aux composantes temporelles de la première matrice $k^{T0}$ de sorte à déterminer une deuxième matrice notée $K^{T0}(\omega)$ (étape E40), où $\omega$ désigne la pulsation ou vitesse de rotation (de façon connue en soi, $\omega=2\pi f$ où f désigne la fréquence). Dans le mode de réalisation décrit ici, la transformée de Fourier appliquée par le deuxième module de détermination 6B est une transformée de Fourier rapide ou FFT (Fast Fourier Transform) connue en soi.

Les composantes notées $Kij^{T0}(\omega)$ de la matrice $K^{T0}(\omega)$ sont par conséquent des composantes fréquentielles. Chaque composante $Kij^{T0}(\omega)$ de la matrice est un signal fréquentiel, dépendant de la pulsation $\omega$ (ou de façon équivalente de la fréquence f avec $\omega=2\pi f$ comme rappelé ci-dessus).

Dans le mode de réalisation décrit ici, le deuxième module de détermination 6B détermine ensuite, à partir de la deuxième matrice $K^{T0}(\omega)$, au moins une matrice $K^{T0}(\omega c)$ dont les composantes sont considérées à une pulsation $\omega c=2\pi fc$ où fc est une fréquence sélectionnée dans une bande fréquentielle de largeur $\Delta f$ autour de la fréquence f0 à laquelle ont été émises les ondes ultrasonores par le transducteur multiélément lors de l'étape E20 (étape E50).

Dans la suite de la description, par souci de simplification, on considère une seule matrice, à savoir la matrice $K^{T0}(\omega c)$ avec $\omega c=2\pi f0$ (deuxième matrice au sens de l'invention). Toutefois, le deuxième module de détermination 6B peut extraire une pluralité de matrices à partir de la matrice $Kij^{T0}(\omega)$ correspondant à différentes fréquences, sélectionnées autour de la fréquence f0. Autrement dit, si en plus le premier module de détermination 6A a extrait différentes matrices $k^T$ de la matrice des signaux mesurés par le transducteur multiéléments lors de l'étape E20, le dispositif de validation 6 peut, à l'issue de l'étape E50 disposer de plusieurs matrices de signaux fréquentiels $Kij^T(\omega)$ correspondant à différentes références temporelles T et/ou tranches temporelles, et à différentes fréquences f ou pulsations $\omega=2\pi f$. Les étapes suivantes sont décrites pour l'unique matrice $K^{T0}(\omega c=2\pi f0)$, mais dans le cas où plusieurs matrices $Kij^T(\omega)$ sont obtenues à l'issue de l'étape E50, ces étapes sont appliquées à chacune des matrices $Kij^T(\omega)$ obtenues.

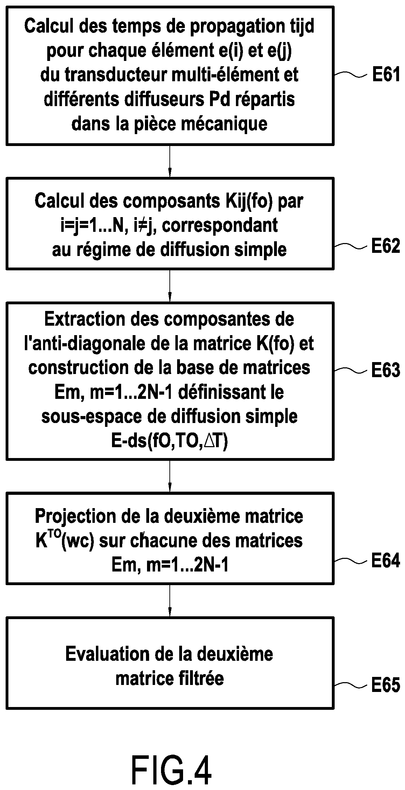

La matrice K<sup>TO</sup>(ωc) est alors filtrée par le module de filtrage 6C du dispositif de validation 6 (étape E60). Le filtrage réalisé par le module de filtrage 6C consiste à projeter la matrice K<sup>TO</sup>(ωc) sur un sous-espace de diffusion simple déterminé conformément à l'invention, comme détaillé ci-après en référence à la figure 4.

La **figure 4** illustre les principales étapes mises en oeuvre par le module de filtrage 6C pour déterminer le sous-espace de diffusion simple noté dans la suite E_ds(f0,T0,ΔT) sur lequel projeter la matrice K<sup>TO</sup>(ωc) et filtrer la matrice K<sup>TO</sup>(ωc) lors de l'étape de filtrage E60.

Le sous-espace de diffusion simple déterminé par le module de filtrage 6C tient compte avantageusement des hypothèses expérimentales considérées, à savoir, non seulement de la forme de la pièce mécanique 2, mais également de la fréquence (ici ωc=2πf0) et de la référence temporelle TO considérées pour déterminer la matrice K<sup>TO</sup>(ωc) que l'on souhaite filtrer (on néglige ici la tranche temporelle ΔT prise autour de TO supposée relativement fine).

On note en corollaire, que lorsque les modules de détermination 6A et 6B déterminent plusieurs matrices, ce sous-espace de diffusion simple diffère d'une matrice à l'autre.

Dans le mode de réalisation décrit ici, le sous-espace de diffusion simple E_ds(f0,T0,ΔT) est défini par le module de filtrage 6C à partir d'une base comprenant 2N-1 matrices notées Em, m=1,...,2N-1. Pour déterminer cette base de matrices, le module de filtrage 6C, via son module 6C1 (troisième module de détermination au sens de l'invention), utilise un algorithme de tracé de rayons (ou « ray-tracing » en anglais) qui lui permet de calculer numériquement les composantes de chacune des matrices Em, m=1,...,2N-1, comme détaillé ci-dessous.

Pour effectuer ce calcul, les inventeurs se sont appuyés sur les hypothèses et les considérations suivantes.

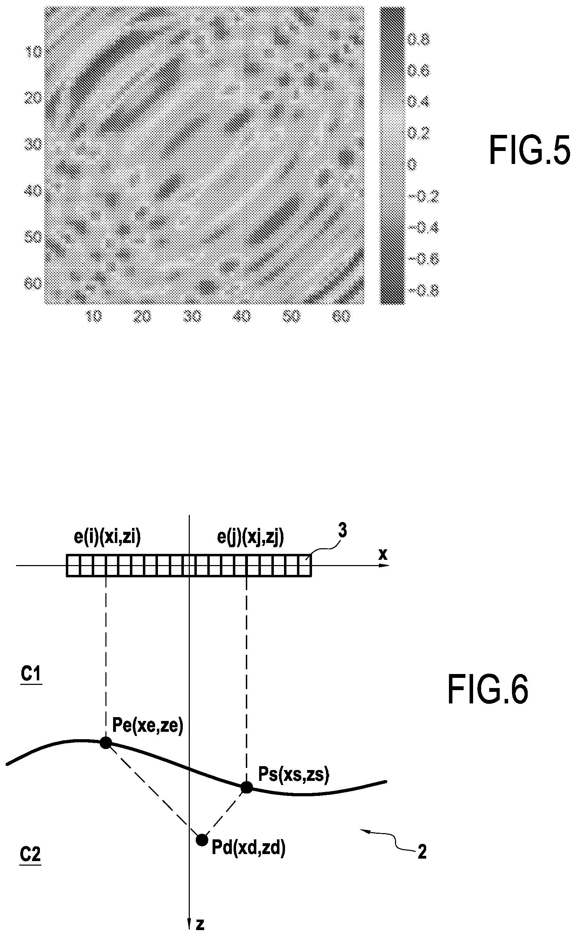

La matrice expérimentale inter-élément k<sup>TO</sup> comprenant les mesures effectuées lors de l'étape E20 peut s'écrire sous la forme d'une matrice correspondant au régime de diffusion simple et d'une matrice de bruit. La matrice correspondant au régime de diffusion simple présente dans le domaine fréquentiel une forme particulière, caractérisée par une loi de phase sur ses composantes anti-diagonales, comme illustré graphiquement à la **figure 5** dans un exemple particulier donné à titre illustratif.

Ainsi, calculer l'espace de diffusion simple E_ds(f0,T0,ΔT) sur lequel projeter la matrice K<sup>TO</sup>(ωc), et plus particulièrement la base des matrices Em, m=1,...,2N-1 définissant ce sous-espace, revient à calculer la loi de phase des composantes de l'anti-diagonale de la transformée de Fourier de la matrice inter-élément correspondant au régime de diffusion simple.

Si l'on considère un unique diffuseur Pd au sein du matériau de la pièce mécanique 2 correspondant à un temps de propagation tijd de l'onde ultrasonore émise par l'élément e(i) du transducteur multiélément 3 vers le diffuseur d, puis renvoyée du diffuseur d vers l'élément e(j) du transducteur multiélément 3, la composante indexée par i et j de la transformée de Fourier de la matrice inter-élément peut s'écrire sous la forme :

$$\exp(\mathbf{j}2\pi f(\text{tijd}))$$

où j désigne l'élément complexe tel que (j)²=-1 et f désigne la fréquence.

Pour mieux caractériser la diffusion du milieu de la pièce mécanique 2, les inventeurs ont considéré une pluralité D de diffuseurs Pd, d=1,...,D, (D désignant un entier supérieur à 1) répartis en divers points de la pièce mécanique 2. La contribution notée Hij de cette pluralité de diffuseurs au régime de diffusion simple s'écrit, pour la composante indexée par i et j de la transformée de Fourier de la matrice inter-élément :

$$Hij(f) = \sum_{d=1,...D} \exp(\text{j}2\pi f(\text{tijd})) \quad (\text{Eq. 1})$$

On note qu'il s'agit là de diffuseurs Pd, d=1,...,D qui ont une position dans la pièce mécanique 2 compatible avec la référence temporelle considérée pour construire la première matrice (dans l'exemple du sous-espace de diffusion simple E_ds(f0,T0,ΔT), cette référence temporelle est T0). Plus précisément, les diffuseurs Pd, d=1,...,D sont choisis de sorte à être à une profondeur dans la pièce mécanique 2 déterminée par rapport au transducteur multiélément 3 à partir de la quantité TO : cette profondeur correspond à la profondeur atteignable par une onde s'étant propagée dans la pièce 2 et revenue sur le transducteur 3 en un temps TO. La position latérale du diffuseur Pd dans la pièce 2 est déterminée par un tirage de nombre aléatoire et ne peut pas dépasser la dimension latérale du transducteur multiélément 3. Les diffuseurs Pd, d=1,...,D sont donc tous situés à la même profondeur mais à des positions latérales différentes et aléatoires.

Conformément à l'invention, le module de filtrage 6C se base sur les contributions Hij(f) ainsi calculées, et plus spécifiquement sur les contributions Hij(f0) calculées au moyen de l'équation (Eq. 1) à la fréquence f0, pour déterminer la base de matrices Em, m=1,...,2N-1 définissant le sous-espace de diffusion simple E_ds(f0,T0,ΔT). Les composantes Hij(f0) calculées par le module de filtrage 6C correspondent à une estimation de la contribution du régime de diffusion simple dans les composantes fréquentielles de la deuxième matrice K<sup>TO</sup>(ωc) reflétant les mesures effectuées par le transducteur multiélément 3, autrement dit à la valeur que devraient avoir les composantes fréquentielles de la deuxième matrice si celles-ci n'étaient pas entachées d'un bruit et n'étaient liées qu'à un régime de diffusion simple dans la pièce mécanique 2 (on assimile le régime de diffusion multiple à un bruit au même titre que le bruit électronique). Les composantes $H_{ij}(f0)$ ainsi calculées par le module de filtrage 6C forment une troisième matrice $H(f0)$ au sens de l'invention.

En raison de la propriété évoquée ci-dessus et illustrée à la figure 5 de la matrice correspondant au régime de diffusion simple (loi de phase sur l'anti-diagonale), le module de filtrage 6C est configuré pour extraire les composantes se trouvant sur l'anti-diagonale de la troisième matrice $H(f0)$ et construire les matrices Em à partir des composantes ainsi extraites, comme décrit plus en détail ultérieurement.

Nous allons décrire plus en détail maintenant les trois opérations précitées réalisées par le module de filtrage 6C pour construire les matrices Em et calculer numériquement le sous-espace de diffusion simple $E\_ds(f0,T0,\Delta T)$.

L'évaluation de l'équation (Eq. 1) pour $f=f0$ requiert l'estimation par le module de filtrage 6C des temps de propagation $tijd$ (étape E61). Pour calculer les temps de propagation $tijd$ associés aux différents diffuseurs Pd, d=1,...,D considérés dans la pièce mécanique 2, le module de filtrage 6C utilise un algorithme de tracé de rayons. Un tel algorithme, permet, de façon connue, de relier chaque élément e(i) et chaque élément e(j) du transducteur multiélément 3, i≠j, avec un diffuseur Pd choisi en un point de la pièce mécanique 2 et situé à une profondeur correspondant à la référence temporelle T0, par un chemin compatible avec les lois de Snell Descartes, comme illustré sur la **figure 6.**

La figure 6 représente dans un plan (x,z) un diffuseur Pd choisi au sein du matériau de la pièce mécanique 2 comme indiqué précédemment. Le diffuseur Pd a pour coordonnées $(xd,zd)$ dans le plan (x,z). L'algorithme de tracé de rayons utilisé par le module de filtrage 6C permet avantageusement de déterminer un (ou plusieurs) chemin(s) réaliste(s) (« rayons ») au regard des lois de la physique reliant l'élément e(i) du transducteur multiélément 3 de coordonnées $(xi,zi)$ dans le plan (x,z) au diffuseur Pd, puis reliant le diffuseur Pd à l'élément e(j) du transducteur multiélément 3 de coordonnées $(xj,zj)$ dans le plan (x,z), et de calculer le temps de propagation $tijd$ de l'onde ultrasonore se propageant selon ce(s) chemin(s). Il tient compte avantageusement de la forme de l'interface entre le transducteur multiélément 3 et la pièce mécanique 2.

Selon un tel chemin réaliste, une onde ultrasonore émise par l'élément e(i) pénètre (entre) dans le matériau de la pièce mécanique 2 en un point Pe de coordonnées $(xe,ze)$ dans le plan (x,z), et ressort de la pièce mécanique, après diffusion par le diffuseur Pd, par le point de sortie Ps de coordonnées $(xs,zs)$ dans le plan (x,z). Pour déterminer ce chemin, l'algorithme de tracé de rayons émet l'onde à partir de l'élément e(i) dans diverses directions (ceci constitue les « rayons », par exemple l'algorithme considère un rayon tous les 0.1° dans un cône de 90° orienté vers la pièce mécanique 2) et retient la direction permettant à l'onde de traverser l'interface et d'arriver proche du diffuseur Pd considéré (on se fixe par exemple comme condition de proximité la contrainte d'avoir le ratio de la distance résiduelle sur la largeur du transducteur inférieure à un seuil prédéterminé, typiquement $10^{-3}$).

Une fois ce chemin réaliste déterminé, l'algorithme de tracé de rayons calcule le temps de propagation $tijd$ en appliquant la formule suivante :

$$tijd = \min_{Pe} tid(Pe) + \min_{Ps} tdj(Ps)$$

où $tid(Pe)$ désigne le temps de propagation de l'onde ultrasonore de l'élément e(i) du transducteur 3 jusqu'au diffuseur Pd empruntant le chemin entrant dans la pièce mécanique 2 par le point Pe, et $tdj(Ps)$ désigne le temps de propagation de l'onde ultrasonore du diffuseur Pd jusqu'à l'élément e(j) du transducteur 3 lorsque celle-ci emprunte le chemin sortant de la pièce mécanique 2 par le point Ps. Les temps de propagation $tid(Pe)$ et $tjd(Ps)$ sont calculés de la façon suivante par l'algorithme de tracé de rayons pour chaque couple de points (Pe,Ps) déterminés par l'algorithme de tracé de rayons :

$$tid(Pe) = \frac{\sqrt{(xe - xi)^2 + (ze - zi)^2}}{c1} + \frac{\sqrt{(xd - xe)^2 + (zd - ze)^2}}{c2}$$

où c1 désigne la vitesse de propagation de l'onde ultrasonore dans le milieu séparant le transducteur multiélément 3 de la pièce mécanique 2 (ex. vitesse de propagation dans l'eau si la pièce mécanique 2 est immergée dans une cuve d'eau et que la transducteur multiélément 3 se déplace à la surface de la cuve), et c2 désigne la vitesse de propagation de l'onde ultrasonore dans le matériau de la pièce mécanique 2 ; et

$$tdj(Ps) = \frac{\sqrt{(xd - xs)^2 + (zd - zs)^2}}{c2} + \frac{\sqrt{(xs - xj)^2 + (zs - zj)^2}}{c1}$$

Il résulte de ce qui précède que l'utilisation de l'algorithme de tracé de rayons permet au module de détermination 6C1 de calculer les temps de propagation tijd en tenant compte de la forme de la pièce mécanique 2 mais également du placement du transducteur multiéléments 3 et des milieux dans lesquels se propagent les ondes ultrasonores émises lors de l'étape de mesure E20 entre les éléments e(i) et e(j) du transducteur et chaque diffuseur Pd.

On note que le nombre de chemins (et de points Pe et Ps correspondant à ces chemins) considérés par l'algorithme de tracé de rayons pour déterminer tijd est paramétrable et dépend d'un compromis complexité/précision que l'on souhaite atteindre (plus le nombre de chemins considéré est important, meilleure est la précision du calcul de tijd). En pratique, les inventeurs ont constaté qu'un nombre supérieur ou égal à 20 chemins par degré permet d'atteindre un compromis complexité/précision satisfaisant.

A partir des temps de propagation tijd ainsi calculés par le module de filtrage 6C au moyen de l'algorithme de tracé de rayons, celui-ci, via son module de détermination 6C1, calcule les composantes Hij(f0) de la troisième matrice H(f0) représentant la contribution du régime en diffusion simple comme mentionné précédemment, en appliquant l'équation (Eq. 1) à la fréquence f=f0 (étape E62) :

$$Hij(f0) = \sum_{d=1,\ldots D} \exp(j2\pi f0(tijd))$$

Puis le module de détermination 6C1 extrait les composantes de l'anti-diagonale de la troisième matrice H(f0) pour construire la base des matrices Em, m=1,...,2N-1. Plus particulièrement, il détermine les composantes Em(i,j), i,j=1,...,N de chaque matrice Em de la façon suivante (étape E63) :

$$Em(i,j) = \begin{cases} \dfrac{g(i-j)}{A(m)} & si\ i+j = m+1 \\ 0 & sinon \end{cases}$$

où la fonction g(x) est définie par les relations :

- si N est impair, soit N=2M+1 :

$$g(x) = H(M+1-x)(M+1+x)$$

avec x entier allant de -M à M ;
- si N est pair, soit N=2M :

$$g(x) = H(2M-x)(1+x)$$

avec x entier allant de 0 à 2M-1 ;

et A(m) est une fonction de normalisation telle que :

$$A(m) = \begin{cases} m & si\ m \le N \\ 2N-m & si\ m > N \end{cases}$$

La base des matrices Em, m=1,...,2N-1 ainsi construite par le module de détermination 6C1 du module de filtrage 6C définit le sous-espace de diffusion simple utilisé par le module de filtrage 6C pour filtrer la deuxième matrice $K^{T0}(\omega c)$. Pour réaliser ce filtrage, le module de filtrage 6C, via son module de projection 6C2, projette la deuxième matrice $K^{T0}(\omega c)$ sur chacune des matrices Em, m=1,...,2N-1 (étape E64). Plus spécifiquement, il calcule pour m=1,..2N-1 la projection notée pm de la matrice $K^{T0}(\omega c)$ sur chacune des matrices Em selon (étape E64) :

$$pm = <K^{T0}(\omega c)|Em>$$

où < A|B > = Tr(AB*) où Tr(M) désigne la trace de la matrice M et M* désigne la transposée conjuguée de la matrice M.

Puis le module de filtrage 6C, via son module d'évaluation 6C3, évalue la deuxième matrice filtrée (notée ci-dessous $FK^{T0}(\omega c)$) en sommant l'ensemble des matrices de la base pondérées respectivement par les projections obtenues sur ces bases, soit (étape E65) :

$$FK^{T0}(wc) = \sum_{m=1}^{2N-1} pmEm$$

Ceci clôture l'étape de filtrage E60 mise en oeuvre par le module de filtrage 6C du dispositif de validation 6. La matrice filtrée $FK^{T0}(\omega c)$ obtenue est ensuite fournie au module d'analyse 6D du dispositif de validation 6 pour analyse et détection le cas échéant, d'indications de défaut dans la pièce mécanique 2 (étape E70 de la figure 3).

Si plusieurs matrices ont été déterminées à l'issue de l'étape E50, l'étape E60 est mise en oeuvre sur chacune de ces matrices, et l'ensemble des matrices filtrées est fourni au module d'analyse 6D.

Aucune limitation n'est attachée à l'algorithme utilisé par le module d'analyse 6D pour vérifier l'intégrité de la pièce mécanique 2, et détecter le cas échéant la présence d'un défaut dans la pièce mécanique 2 à partir de la ou des matrices filtrées qui lui sont fournies.

Ainsi, par exemple, le module d'analyse 6D peut utiliser à cet effet une technique DORT de diagonalisation de l'opérateur de retournement temporel telle que décrite notamment dans le document de C. Prada et al. intitulé « Eigenmodes of the time reversai operator : a solution to selective focusing in multiple-target medias », Wave motion, vol. 20 n°2 pages 151-163, 1994. Il peut procéder à cet effet comme décrit dans le document WO 2010/001027 en considérant un seuil sur la première valeur singulière de la matrice filtrée.

En variante, le module d'analyse 6D peut utiliser une méthode de focalisation totale telle que décrite dans le document de C. Holmes et al. intutilé « Post-processing of the full matrix of ultrasonic transmitreceive array data for non-destructive evaluation », NDF E. International, vol. 38, pages 701-711, 2005.

Ces exemples ne sont toutefois donnés qu'à titre illustratif et d'autres algorithmes peuvent être envisagés pour vérifier l'intégrité de la pièce mécanique 2 à partir de la matrice filtrée $FK^{T0}(\omega c)$.

Si un défaut est détecté par le module d'analyse 6D lors de l'étape de vérification E70 (réponse oui à l'étape test E80), la pièce mécanique 2 est déclarée non conforme (ou non valide) et rejetée (étape E90).

Si aucun défaut n'est détecté (réponse non à l'étape test E80), la pièce mécanique 2 est validée (étape E100), et peut être utilisée conformément à sa destination finale (i.e. montée sur le moteur d'aéronef à laquelle elle est destinée dans l'exemple envisagé ici).

L'invention permet donc avantageusement un contrôle non destructif d'une pièce mécanique au moyen d'ondes ultrasonores émises par un transducteur multiéléments, quelle que soit la forme de cette pièce mécanique et quelle que soit la complexité de l'interface entre le transducteur multiélément et la pièce mécanique. Le filtrage réalisé conformément à l'invention permet une réduction substantielle du bruit présent dans les mesures réalisées au moyen du transducteur multiélément ce qui permet d'améliorer l'efficacité du contrôle non destructif opéré ensuite. L'invention peut ainsi s'appliquer dans de nombreux secteurs industriels dans lesquels le contrôle destructif de pièces mécaniques est envisagé.

**Revendications**

1. Procédé de contrôle non destructif d'une pièce mécanique (2) par propagation d'ondes ultrasonores réalisée au moyen d'un transducteur multiélément (3) placé en vis-à-vis de la pièce mécanique et comprenant une pluralité d'éléments piézoélectriques e(1),e(2),...,e(N), N désignant un entier supérieur à 1, ledit procédé de contrôle comprenant :

— une étape (E20) de mesure comprenant, pour chaque élément e(i) du transducteur, l'émission d'une onde ultrasonore à une fréquence donnée et la mesure, par chaque élément e(j) du transducteur distinct de l'élément e(i), d'un signal temporel noté kij(t) représentatif de l'onde ultrasonore rétrodiffusée reçue par l'élément e(j) ;
— une étape (E30) de détermination d'au moins une première matrice de composantes temporelles à partir des signaux kij(t) mesurés, i,j=1,...,N, pris sur une durée prédéterminée autour d'une référence temporelle notée T ;
— une étape (E40,E50) de détermination d'au moins une deuxième matrice de composantes fréquentielles correspondant à une fréquence déterminée à partir de la fréquence de l'onde ultrasonore en appliquant une transformée de Fourier aux composantes temporelles de ladite au moins une première matrice ;
— une étape (E60) de filtrage de ladite au moins une deuxième matrice comprenant une projection de ladite au moins une deuxième matrice de composantes fréquentielles sur un sous-espace de diffusion simple ; et
— une étape de vérification (E70-E100) de l'intégrité de la pièce mécanique en utilisant ladite au moins une deuxième matrice filtrée ;

le procédé de contrôle étant **caractérisé en ce que** le sous-espace de diffusion simple utilisé lors de l'étape de filtrage est déterminé au moyen d'un calcul numérique utilisant un algorithme de tracé de rayons.

**2.** Procédé de contrôle non destructif selon la revendication 1 dans lequel l'étape de filtrage (E60) de la deuxième matrice comprend :

— une étape de détermination (E61-E63) du sous-espace de diffusion simple, ledit sous-espace de diffusion simple étant défini à partir d'une base de 2N-1 matrices notées Em, m=1,...,2N-1, ladite étape de détermination comprenant :

o pour chaque couple d'éléments distincts e(i) et e(j) du transducteur, i, j, =1,...,N, une étape de calcul numérique en utilisant un algorithme de tracé de rayons, pour une pluralité D de diffuseurs notés Pd, d=1...,D répartis en divers points de la pièce mécanique et situés à une profondeur déterminée en fonction de la référence temporelle T, d'un temps de propagation tijd d'une onde ultrasonore émise par l'élément e(i), diffractée par le diffuseur Pd et reçue par l'élément e(j), le temps de propagation tijd étant calculé en tenant compte de la forme de la pièce mécanique, du placement du transducteur et des milieux dans lesquels se propage l'onde ultrasonore entre les éléments e(i) et e(j) du transducteur et le diffuseur Pd ;
∘ une étape d'estimation d'une contribution de la diffusion simple dans les composantes fréquentielles de la deuxième matrice à partir des temps de propagation calculés pour chaque couple d'éléments distincts e(i) et e(j) du transducteur, ladite étape d'estimation fournissant une troisième matrice ;
∘ une étape d'extraction des composantes fréquentielles d'une anti-diagonale centrale de la troisième matrice pour construire la base de matrices Em, m=1,...,2N-1 définissant le sous-espace de diffusion simple ;

— une étape de projection (E64) de ladite au moins une deuxième matrice sur chacune des matrices Em, m=1,..,2N-1 de la base de 2N-1 matrices ; et
— une étape d'évaluation (E65) de ladite au moins une deuxième matrice filtrée en sommant les matrices Em de la base pondérées par les projections obtenues lors de l'étape de projection.

**3.** Procédé de contrôle selon la revendication 2 dans lequel chaque temps de propagation tijd est calculé selon :

$$tijd = \min_{Pe} tid(Pe) + \min_{Ps} tdj(Ps)$$

où Pe désigne un point d'entrée de coordonnées (xe,ze) de l'onde ultrasonore dans la pièce mécanique et Ps un point de sortie de coordonnées (xs,zs) de l'onde ultrasonore diffractée par le point Xd de coordonnées (xd,zd), avec :

$$tid(x) = \frac{\sqrt{(xe - xi)^2 + (ze - zi)^2}}{c1} + \frac{\sqrt{(xd - xe)^2 + (zd - ze)^2}}{c2}$$

et

$$tdj(x) = \frac{\sqrt{(xd - xs)^2 + (zd - zs)^2}}{c2} + \frac{\sqrt{(xs - xj)^2 + (zs - zj)^2}}{c1}$$

où c1 désigne la vitesse de propagation de l'onde ultrasonore dans le milieu séparant le transducteur de la pièce mécanique et c2 désigne la vitesse de propagation de l'onde ultrasonore dans la pièce mécanique.

**4.** Procédé de contrôle selon l'une quelconque des revendications 1 à 3 dans lequel la pièce mécanique (2) est une billette ou un disque de soufflante ou un disque aubagé monobloc d'un moteur d'aéronef.

**5.** Procédé de contrôle selon l'une quelconque des revendications 1 à 4 dans lequel plusieurs premières matrices correspondant à des références temporelles différentes et/ou à des durées prédéterminées différentes sont déterminées.

6. Procédé de contrôle selon l'une quelconque des revendications 1 à 5 dans lequel ladite au moins une deuxième matrice est déterminée à la fréquence de l'onde ultrasonore.

7. Procédé de contrôle selon la revendication 6 dans lequel plusieurs deuxièmes matrices sont déterminées à une pluralité de fréquences contenues dans un intervalle prédéterminé défini autour de la fréquence de l'onde ultrasonore.

8. Procédé de contrôle selon l'une quelconque des revendications 1 à 7 dans lequel l'étape de vérification (E70) de l'intégrité de la pièce mécanique utilise une technique DORT de diagonalisation de l'opérateur de retournement temporel ou une méthode de focalisation totale.

9. Système de contrôle (1) non destructif d'une pièce mécanique (2) comprenant :

— un transducteur multiélément (3) placé en vis-à-vis de la pièce mécanique et apte à émettre des ondes ultrasonores, ledit transducteur comprenant une pluralité d'éléments piézoélectriques e(1),e(2),...,e(N), N désignant un entier supérieur à 1, ledit transducteur étant configuré pour émettre, via chaque élément e(i) du transducteur, une onde ultrasonore à une fréquence donnée, et à mesurer, via chaque élément e(j) du transducteur distinct de l'élément e(i), un signal temporel noté kij(t) représentatif de l'onde ultrasonore rétrodiffusée reçue par l'élément e(j) ;
— un dispositif de validation (6) comprenant :

  ◦ un premier module de détermination (6A), configuré pour déterminer au moins une première matrice de composantes temporelles à partir des signaux kij(t) mesurés, i,j=1,...,N, pris sur une durée prédéterminée autour d'une référence temporelle notée T ;
  ◦ un deuxième module de détermination (6B), configuré pour déterminer au moins une deuxième matrice de composantes fréquentielles correspondant à une fréquence déterminée à partir de la fréquence de l'onde ultrasonore en appliquant une transformée de Fourier aux composantes temporelles de ladite au moins une première matrice ;
  ◦ un module de filtrage (6C), configuré pour filtrer ladite au moins une deuxième matrice en projetant ladite au moins une deuxième matrice de composantes fréquentielles sur un sous-espace de diffusion simple ; et
  ◦ un module d'analyse (6D), configuré pour vérifier l'intégrité de la pièce mécanique en utilisant ladite au moins une deuxième matrice filtrée ;

le système de contrôle étant **caractérisé en ce que** ledit module de filtrage (6C) est configuré pour déterminer le sous-espace de diffusion simple au moyen d'un calcul numérique utilisant un algorithme de tracé de rayons.

10. Système de contrôle selon la revendication 9 dans lequel ledit module de filtrage (6C) comprend :

— un troisième module de détermination (6C1), configuré pour déterminer le sous-espace de diffusion simple à partir d'une base de 2N-1 matrices notées Em, m=1,...,2N-1, ledit troisième module de détermination étant configuré pour:

  ◦ pour chaque couple d'éléments distincts e(i) et e(j) du transducteur, i, j, =1,...,N, calculer numériquement en utilisant un algorithme de tracé de rayons, pour une pluralité D de diffuseurs notés Pd, d=1...,D répartis en divers points de la pièce mécanique et situés à une profondeur déterminée en fonction de la référence temporelle T, un temps de propagation tijd d'une onde ultrasonore émise par l'élément e(i), diffractée par le diffuseur Pd et rétrodiffusée par l'élément e(j), ledit temps de propagation étant calculé en tenant compte de la forme de la pièce mécanique, du placement du transducteur et des milieux dans lesquels se propage l'onde ultrasonore entre les éléments e(i) et e(j) du transducteur et le diffuseur Pd ;
  o estimer une contribution de la diffusion simple dans les composantes fréquentielles de la deuxième matrice à partir des temps de propagation calculés pour chaque couple d'éléments distincts e(i) et e(j) du transducteur, et obtenir une troisième matrice à partir des contributions estimées ;
  ◦ extraire des composantes fréquentielles d'une anti-diagonale centrale de la troisième matrice pour construire la base de matrices Em, m=1,...,2N-1 définissant le sous-espace de diffusion simple ;

— un module de projection (6C2), configuré pour projeter ladite au moins une deuxième matrice sur chacune des matrices Em, m=1,..,2N-1 de la base de 2N-1 matrices ; et

— un module d'évaluation (6C3) configuré pour évaluer ladite au moins une deuxième matrice filtrée en sommant les matrices Em de la base pondérées par les projections obtenues lors de l'étape de projection.

11. Système de contrôle selon la revendication 9 ou 10 comprenant en outre un bras robotisé (5) sur lequel est placé le transducteur multiélément, ledit bras robotisé étant configuré pour permettre un déplacement du transducteur multiélément autour de la pièce mécanique.

12. Système de contrôle selon l'une quelconque des revendications 9 à 11 dans lequel le transducteur (3) est linéaire.

**Patentansprüche**

1. Verfahren zur zerstörungsfreien Prüfung eines mechanischen Bauteils (2) durch Ausbreitung von Ultraschallwellen, die mittels eines Multielement-Wandlers (3) erfolgt, der gegenüber dem mechanischen Bauteil angeordnet ist und eine Vielzahl von piezoelektrischen Elementen e(1), e(2), ..., e(N) umfasst, wobei N eine ganze Zahl größer als 1 bezeichnet, wobei das Prüfverfahren Folgendes umfasst:

   - einen Messschritt (E20), der für jedes Element e(i) des Wandlers das Aussenden einer Ultraschallwelle mit einer gegebenen Frequenz und die Messung, durch jedes vom Element e(i) verschiedene Element e(j) des Wandlers, eines mit kij(t) bezeichneten Zeitsignals umfasst, das für die vom Element e(j) empfangene rückgestreute Ultraschallwelle repräsentativ ist;
   - einen Schritt (E30) der Bestimmung mindestens einer ersten Matrix von Zeitkomponenten anhand der gemessenen Signale kij(t), i,j = 1, ..., N, die über eine vorbestimmte Dauer um eine mit T bezeichnete Zeitreferenz herum aufgenommen wurden;
   - einen Schritt (E40, E50) der Bestimmung mindestens einer zweiten Matrix von Frequenzkomponenten, die einer Frequenz entsprechen, welche anhand der Frequenz der Ultraschallwelle bestimmt wird, indem eine Fourier-Transformation auf die Zeitkomponenten der mindestens einen ersten Matrix angewendet wird;
   - einen Schritt (E60) der Filterung der mindestens einen zweiten Matrix, der eine Projektion der mindestens einen zweiten Matrix von Frequenzkomponenten auf einen Einfachstreuungsunterraum umfasst; und
   - einen Schritt der Verifizierung (E70-E100) der Unversehrtheit des mechanischen Bauteils unter Verwendung der mindestens einen zweiten gefilterten Matrix;

   wobei das Prüfverfahren **dadurch gekennzeichnet ist, dass** der Einfachstreuungsunterraum, der bei dem Filterungsschritt verwendet wird, mittels einer numerischen Berechnung unter Verwendung eines Raytracing-Algorithmus bestimmt wird.

2. Verfahren zur zerstörungsfreien Prüfung nach Anspruch 1, wobei der Schritt der Filterung (E60) der zweiten Matrix umfasst:

   - einen Schritt der Bestimmung (E61-E63) des Einfachstreuungsunterraums, wobei der Einfachstreuungsunterraum anhand einer Basis von 2N-1 Matrizen, die mit Em, m = 1, ..., 2N-1 bezeichnet sind, definiert wird, wobei der Bestimmungsschritt umfasst:

      ◦ für jedes Paar unterschiedlicher Elemente e(i) und e(j) des Wandlers, i, j = 1, ..., N, einen Schritt der numerischen Berechnung, unter Verwendung eines Raytracing-Algorithmus für eine Vielzahl D von Diffusoren, bezeichnet mit Pd, d = 1..., D, die an verschiedenen Punkten des mechanischen Bauteils verteilt sind und sich in einer Tiefe befinden, welche in Abhängigkeit von der Zeitreferenz T bestimmt wird, einer Laufzeit tijd einer Ultraschallwelle, die von dem Element e(i) ausgesendet wird, von dem Diffusor Pd gebeugt wird und von dem Element e(j) empfangen wird, wobei die Laufzeit tijd unter Berücksichtigung der Form des mechanischen Bauteils, der Platzierung des Wandlers und der Medien, in denen sich die Ultraschallwelle zwischen den Elementen e(i) und e(j) des Wandlers und dem Diffusor Pd ausbreitet, berechnet wird;
      ◦ einen Schritt der Schätzung eines Beitrags der Einfachstreuung in den Frequenzkomponenten der zweiten Matrix anhand der Laufzeiten, die für jedes Paar unterschiedlicher Elemente e(i) und e(j) des Wandlers berechnet wurden, wobei der Schätzschritt eine dritte Matrix liefert;
      ◦ einen Schritt des Extrahierens der Frequenzkomponenten einer zentralen Antidiagonale der dritten Matrix, um die Basis der Matrizen Em, m = 1, ..., 2N-1, zu konstruieren, die den Einfachstreuungsunterraum definieren;

- einen Schritt des Projizierens (E64) der mindestens einen zweiten Matrix auf jede der Matrizen Em, m = 1, ..., 2N-1 der Basis von 2N-1 Matrizen; und
- einen Schritt des Evaluierens (E65) der mindestens einen zweiten gefilterten Matrix durch Summieren der Matrizen Em der Basis, die mit den im Projektionsschritt erhaltenen Projektionen gewichtet wurden.

3. Prüfverfahren nach Anspruch 2, wobei jede Laufzeit tijd berechnet wird gemäß:

$$tijd = min_{Pe}\, tid(Pe) + min_{Ps}\, tdj(Ps)$$

wobei Pe einen Eintrittspunkt mit den Koordinaten (xe,ze) der Ultraschallwelle in das mechanische Bauteil bezeichnet und Ps einen Austrittspunkt mit den Koordinaten (xs,zs) der Ultraschallwelle bezeichnet, die von dem Punkt Xd mit den Koordinaten (xd,zd) gebeugt wird, wobei:

$$tid\,(x) = \frac{\sqrt{(xe-xi)^2 + (ze-zi)^2}}{c1} + \frac{\sqrt{(xd-xe)^2 + (zd-ze)^2}}{c2}$$

und

$$tdj(x) = \frac{\sqrt{(xd-xs)^2 + (zd-zs)^2}}{c2} + \frac{\sqrt{(xs-xj)^2 + (zs-zj)^2}}{c1}$$

wobei c1 die Ausbreitungsgeschwindigkeit der Ultraschallwelle in dem Medium bezeichnet, das den Wandler von dem mechanischen Bauteil trennt, und c2 die Ausbreitungsgeschwindigkeit der Ultraschallwelle in dem mechanischen Bauteil bezeichnet.

4. Prüfverfahren nach einem der Ansprüche 1 bis 3, wobei das mechanische Bauteil (2) ein Knüppel oder eine Gebläsescheibe oder eine einteilige beschaufelte Scheibe eines Flugzeugtriebwerks ist.

5. Prüfverfahren nach einem der Ansprüche 1 bis 4, wobei mehrere erste Matrizen bestimmt werden, die unterschiedlichen Zeitreferenzen und/oder unterschiedlichen vorbestimmten Zeitdauern entsprechen.

6. Prüfverfahren nach einem der Ansprüche 1 bis 5, wobei die mindestens eine zweite Matrix bei der Frequenz der Ultraschallwelle bestimmt wird.

7. Prüfverfahren nach Anspruch 6, wobei mehrere zweite Matrizen bei einer Vielzahl von Frequenzen bestimmt werden, die in einem vorbestimmten Intervall enthalten sind, das um die Frequenz der Ultraschallwelle herum definiert ist.

8. Prüfverfahren nach einem der Ansprüche 1 bis 7, wobei der Schritt der Verifizierung (E70) der Unversehrtheit des mechanischen Bauteils eine Diagonalisierung des Zeitumkehroperators (diagonalisation de l'operateur de retournement temporel, DORT) oder eine Methode der vollständigen Fokussierung verwendet.

9. System zur zerstörungsfreien Prüfung (1) eines mechanischen Bauteils (2), das Folgendes umfasst:

- einen Multielement-Wandler (3), der gegenüber dem mechanischen Bauteil angeordnet ist und Ultraschallwellen aussenden kann, wobei der Wandler eine Vielzahl von piezoelektrischen Elementen e(1), e(2), ..., e(N) umfasst, wobei N eine ganze Zahl größer als 1 bezeichnet, wobei der Wandler so konfiguriert ist, dass er über jedes Element e(i) des Wandlers eine Ultraschallwelle mit einer gegebenen Frequenz aussendet und über jedes vom Element e(i) verschiedene Element e(j) des Wandlers ein mit kij(t) bezeichnetes Zeitsignal misst, das für die vom Element e(j) empfangene rückgestreute Ultraschallwelle repräsentativ ist;
- eine Validierungsvorrichtung (6) umfassend:

    ◦ ein erstes Bestimmungsmodul (6A), das dazu konfiguriert ist, mindestens eine erste Matrix von Zeitkomponenten anhand der gemessenen Signale kij(t), i,j = 1, ..., N, zu bestimmen, die über eine vorbestimmte Dauer um eine mit T bezeichnete Zeitreferenz herum aufgenommen wurden;
    ◦ ein zweites Bestimmungsmodul (6B), das dazu konfiguriert ist, mindestens eine zweite Matrix von Frequenzkomponenten zu bestimmen, die einer Frequenz entsprechen, welche anhand der Frequenz der Ultraschallwelle bestimmt wird, indem eine Fourier-Transformation auf die Zeitkomponenten der mindestens einen ersten Matrix angewendet wird;

◦ ein Filtermodul (6C), das dazu konfiguriert ist, die mindestens eine zweite Matrix zu filtern, indem die mindestens eine zweite Matrix von Frequenzkomponenten auf einen Einfachstreuungsunterraum projiziert wird; und

◦ ein Analysemodul (6D), das dazu konfiguriert ist, die Unversehrtheit des mechanischen Bauteils unter Verwendung der mindestens einen zweiten gefilterten Matrix zu verifizieren;

wobei das Prüfsystem **dadurch gekennzeichnet ist, dass** das Filtermodul (6C) so konfiguriert ist, dass es den Einfachstreuungsunterraum mittels einer numerischen Berechnung unter Verwendung eines Raytracing-Algorithmus bestimmt.

10. Prüfsystem nach Anspruch 9, wobei das Filtermodul (6C) umfasst:

- ein drittes Bestimmungsmodul (6C1), das dazu konfiguriert ist, den Einfachstreuungsunterraum anhand einer Basis von 2N-1 Matrizen, die mit Em, m = 1, ..., 2N-1 bezeichnet sind, zu bestimmen, wobei das dritte Bestimmungsmodul konfiguriert ist zum:

◦ numerischen Berechnen, für jedes Paar unterschiedlicher Elemente e(i) und e(j) des Wandlers, i, j = 1, ..., N, unter Verwendung eines Raytracing-Algorithmus für eine Vielzahl D von Diffusoren, bezeichnet mit Pd, d = 1..., D, die an verschiedenen Punkten des mechanischen Bauteils verteilt sind und sich in einer Tiefe befinden, welche in Abhängigkeit von der Zeitreferenz T bestimmt wird, einer Laufzeit tijd einer Ultraschallwelle, die von dem Element e(i) ausgesendet wird, von dem Diffusor Pd gebeugt wird und von dem Element e(j) rückgestreut wird, wobei die Laufzeit unter Berücksichtigung der Form des mechanischen Bauteils, der Platzierung des Wandlers und der Medien, in denen sich die Ultraschallwelle zwischen den Elementen e(i) und e(j) des Wandlers und dem Diffusor Pd ausbreitet, berechnet wird;

◦ Schätzen eines Beitrags der Einfachstreuung in den Frequenzkomponenten der zweiten Matrix anhand der Laufzeiten, die für jedes Paar unterschiedlicher Elemente e(i) und e(j) des Wandlers berechnet wurden, und Erhalten einer dritten Matrix ausgehend von den geschätzten Beiträgen;

◦ Extrahieren der Frequenzkomponenten einer zentralen Antidiagonale der dritten Matrix, um die Basis der Matrizen Em, m = 1, ..., 2N-1, zu konstruieren, die den Einfachstreuungsunterraum definieren;

- ein Projektionsmodul (6C2), das dazu konfiguriert ist, die mindestens eine zweite Matrix auf jede der Matrizen Em, m =1, ..., 2N-1 der Basis von 2N-1 Matrizen zu projizieren; und

- ein Evaluierungsmodul (6C3), das dazu konfiguriert ist, die mindestens eine zweite gefilterte Matrix durch Summieren der Matrizen Em der Basis, die mit den im Projektionsschritt erhaltenen Projektionen gewichtet wurden, zu evaluieren.

11. Prüfsystem nach Anspruch 9 oder 10, ferner umfassend einen Roboterarm (5), auf dem der Multielement-Wandler platziert ist, wobei der Roboterarm so konfiguriert ist, dass er eine Bewegung des Multielement-Wandlers um das mechanische Bauteil herum ermöglicht.

12. Prüfsystem nach einem der Ansprüche 9 bis 11, wobei der Wandler (3) linear ist.

**Claims**

1. A method for the non-destructive testing of a mechanical part (2) by propagation of ultrasonic waves accomplished by means of a multielement transducer (3) placed opposite the mechanical part and comprising a plurality of piezoelectric elements e(1), e(2),..., e(N), N designating an integer greater than 1, said testing method comprising:

— a measuring step (E20) comprising, for each element e(i) of the transducer, the emission of an ultrasonic wave at a given frequency and the measurement, by each element e(j) of the transducer distinct from the element e(i), of a time-varying signal denoted kij(t) representing the back-scattered ultrasound wave received by the element e(j);

— a step (E30) of determining at least one first matrix of time-varying components based on the measured signals kij(t), i,j=1,...,N, taken over a predetermined duration around a time reference denoted T;

— a step (E40, E50) of determining at least one second matrix of frequency components corresponding to a predetermined frequency based on the frequency of the sound wave by applying a Fourier transformation to the time-varying components of said at least one first matrix;

— a step (E60) of filtering said at least one second matrix comprising a projection of said at least one second matrix of frequency components onto a single scattering sub-space; and

— a step (E70-E100) of verifying the integrity of the mechanical part by using said at least one filtered second matrix;

the testing method being **characterized in that** the single scattering sub-space used during the filtering step is determined by means of a numerical calculation using a ray tracing algorithm.

2. The non-destructive testing method according to claim 1, wherein the step of filtering (E60) the second matrix comprises:

— a step of determining (E61-E63) the single scattering sub-space, said single scattering sub-space being defined based on a base of 2N-1 matrices denoted Em, m=1,..., 2N-1, said determining step comprising:

∘ for each couple of distinct elements e(i) and e(j) of the transducer, i, j, =1,...,N, a numerical calculation step using a ray-tracing algorithm, for a plurality D of scatterers denoted Pd, d=1...,D distributed in various points of the mechanical part and situated at a depth determined from the time reference T, of a propagation time tijd of an ultrasonic wave emitted by the element e(i), diffracted by the scatterer Pd and received by the element e(j), the propagation time tijd being calculated taking into account the shape of the mechanical part, the placement of the transducer and the media in which the ultrasonic wave is propagated between the elements e(i) and e(j) of the transducer and the scatterer Pd;

∘ a step of estimating a contribution of single scattering in the frequency components of the second matrix, based on the propagation times calculated for each couple of distinct elements e(i) and e(j) of the transducer, said estimating step supplying a third matrix;

∘ a step of extracting the frequency components from a central anti-diagonal of the third matrix to construct the matrix base Em, m=1,..., 2N-1 defining the single scattering sub-space;

— a step of projecting (E64) said at least one second matrix onto each of the matrices Em, m=1,.., 2N-1 of the base of 2N-1 matrices; and

— a step of evaluating (E65) said at least one filtered second matrix by summing the matrices Em of the base weighted by the projections obtained during the projection step.

3. The testing method according to claim 2, wherein each propagation time tijd is calculated according to:

$$tijd = \min_{Pe} tid(Pe) + \min_{Ps} tdj(Ps)$$

where Pe designates an entry point with coordinates (xe, ze) of the ultrasonic wave into the mechanical part and Ps an exit point with coordinates (xs, zs) of the ultrasonic wave diffracted by the point Xd with coordinates (xd, zd), with:

$$tid(x) = \frac{\sqrt{(xe - xi)^2 + (ze - zi)^2}}{c1} + \frac{\sqrt{(xd - xe)^2 + (zd - ze)^2}}{c2}$$

and

$$tdj(x) = \frac{\sqrt{(xd - xs)^2 + (zd - zs)^2}}{c2} + \frac{\sqrt{(xs - xj)^2 + (zs - zj)^2}}{c1}$$

where c1 designates the propagation speed of the ultrasonic wave in the medium separating the transducer from the mechanical part and c2 designates the propagation speed of the ultrasonic wave in the mechanical part.

4. The testing method according to any one of claims 1 to 3, wherein the mechanical part (2) is a billet or a fan disk or a one-piece impeller of an aircraft engine.

5. The testing method according to any one of claims 1 to 4, wherein several first matrices corresponding to different time references and/or to different predetermined durations are determined.

6. The testing method according to any one of claims 1 to 5 wherein said at least one second matrix is determined at the frequency of the ultrasonic wave.

7. The testing method according to claim 6, wherein several second matrices are determined at a plurality of frequencies contained in a predetermined interval around the frequency of the ultrasonic wave.

8. The testing method according to any one of claims 1 to 7 in which the step (E70) of verifying the integrity of the mechanical part uses a DORT technique of diagonalization of the time reversal operator or a total focusing method.

9. A system (1) for non-destructively testing a mechanical part (2) comprising:

   — a multi-element transducer (3) placed opposite the mechanical part and capable of emitting ultrasonic waves, said transducer comprising a plurality of piezoelectric elements e(1), e(2),..., e(N), N designating an integer greater than 1, said transducer being configured to emit, via each element e(i) of the transducer, an ultrasonic wave at a given frequency, and to measure, via each element e(j) of the transducer distinct from the element e(i), a time-varying signal denoted kij(t) representing the back-scattered ultrasonic wave received by the element e(j);
   — a validation device (6) comprising:

      ○ a first determination module (6A), configured to determine at least one first matrix of time-varying components based on the measured signals kij(t), i,j=1,...,N, taken for a predetermined duration around a time reference denoted T;
      ○ a second determination module (6B), configured to determine at least one second matrix of frequency components corresponding to a frequency determined based on the frequency of the sound wave by applying a Fourier transformation to the time-varying components of said at least one first matrix;
      ○ a filtering module (6C), configured to filter said at least one second matrix by projecting said at least one second matrix of frequency components onto a single scattering sub-space; and
      ○ an analysis module (6D), configured to verify the integrity of the mechanical part by using said at least one filtered second matrix;

   the testing system being **characterized in that** said filtering module (6C) is configured to determine the single scattering sub-space by means of a numerical calculation using a ray tracing algorithm.

10. The testing system according to claim 9, wherein said filtering module (6C) comprises:

   — a third determination module (6C1), configured to determine the single scattering sub-space based on a base of 2N-1 matrices denoted Em, m=1,..., 2N-1, said third determination module being configured to:

      ○ for each couple of distinct elements e(i) and e(j) of the transducer, i, j, =1,..., N, calculate numerically, but using a raytracing algorithm, for a plurality D of scatterers denoted Pd, d=1...,D distributed in various points of the mechanical part and situated at a depth determined from the time reference T, a propagation time tijd of an ultrasonic wave emitted by the element e(i), diffracted by the scatterer Pd and back-scattered by the element e(j), said propagation time being calculated taking into account the shape of the mechanical part, the placement of the transducer and the media in which the ultrasonic wave is propagated between the elements e(i) and e(j) of the transducer and the scatterer Pd;
      ○ estimate a contribution of single scattering in the frequency components of the second matrix, based on the propagation times calculated for each couple of distinct elements e(i) and e(j) of the transducer, and obtaining a third matrix based on the estimated contributions;
      ○ extract frequency components from a central anti-diagonal of the third matrix to construct the matrix base Em, m=1,..., 2N-1 defining the single scattering sub-space;

   — a projection module (6C2), configured to project said at least one second matrix onto each of the matrices Em, m=1,..,2N-1 of the base of 2N-1 matrices; and
   — an evaluation module (6C3) configured to evaluate said at least one filtered second matrix by summing the matrices Em of the base weighted by the projections obtained during the projection step.

**11.** The testing system according to claim 9 or 10, also comprising a robotic arm (5) on which is placed the multi-element transducer, said robotic arm being configured to allow displacement of the multi-element transducer around the mechanical part.

**12.** The testing system according to any one of claims 9 to 11, wherein the transducer (3) is linear.

FIG.1

FIG.2

FIG.3

Positionnement du transducteur multi élément 3 — E10

Mesure des signaux temporels kij(t),i,j=1...N par les éléments du transducteur 3 — E20

Détermination de la matrice $k^{TO}=[kij^{TO}(t)]_{i,j=1...N}$ — E30

Détermination de la matrice $K^{TO}(w)=[Kij^{TO}(w)]_{i,j=1...N}$ — E40

Sélection d'une matrice $K^{TO}(wc)$ — E50

Filtrage de la matrice sélectionnée par projection sur un sous-espace de diffusion simple — E60

Analyse de la matrice filtrée et vérification de l'intégrité de la pièce mécanique 2 — E70

E80
Détection d'un défaut ?

non — E100
Validation de la pièce mécanique 2

oui — E90
Rejet de la pièce mécanique 2

Calcul des temps de propagation tijd
pour chaque élément e(i) et e(j)
du transducteur multi-élément et — E61
différents diffuseurs Pd répartis
dans la pièce mécanique

Calcul des composants Kij(fo) par
i=j=1...N, i≠j, correspondant — E62
au régime de diffusion simple

Extraction des composantes de
l'anti-diagonale de la matrice K(fo) et
construction de la base de matrices — E63
Em, m=1...2N-1 définissant le
sous-espace de diffusion simple
E-ds(fO,TO,△T)

Projection de la deuxième matrice
$K^{TO}(wc)$ sur chacune des matrices — E64
Em, m=1...2N-1

Evaluation de la deuxième
matrice filtrée — E65

# FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010001027 A

**Littérature non-brevet citée dans la description**

- **C. PRADA et al.** Eigenmodes of the time reversai operator : a solution to selective focusing in multiple-target medias. *Wave motion,* 1994, vol. 20 (2), 151-163

- **C. HOLMES et al.** Post-processing of the full matrix of ultrasonic transmitreceive array data for non-destructive evaluation. *NDF E. International,* 2005, vol. 38, 701-711